# EUROPEAN PATENT SPECIFICATION

(11) **EP 3 416 909 B1**
(45) Date of publication and mention of the grant of the patent: **30.12.2020**
(21) Application number: 16704867.7
(22) Date of filing: 18.02.2016
(51) Int. Cl.: B66B 5/00

(54) **ELEVATOR ACCESS CONTROL SYSTEM**
ZUGANGSKONTROLLSYSTEM FÜR EINEN AUFZUG
SYSTÈME DE COMMANDE D'ACCÈS À UN ASCENSEUR

(43) Date of publication of application: 26.12.2018
(73) Proprietor: Otis Elevator Company, Farmington, Connecticut 06032 (US)
(72) Inventor: WOLSTENHOLME, Peter, Blackburn BB1 2PR (GB); SOLEY, Dorje, London W4 5YF (GB)
(74) Representative: Schmitt-Nilson Schraud Waibel Wohlfrom Patentanwälte Partnerschaft mbB
(86) International application number: PCT/EP2016/053455
(87) International publication number: WO 2017/140365

(56) References cited:
- WO-A1-2015/099882
- WO-A1-2016/014313
- JP-A- 2006 168 930
- US-A1- 2004 188 185

## Description

The present application relates to an elevator access control system, an elevator car and an elevator system comprising such an elevator access control system. The application further relates to a method of controlling access to an elevator system.

Access control and security systems including mechanical barriers, which are installed in the entrance area of a building for allowing access to the building only to authorized persons, are known in the art. Authorized persons may identify themselves by means of computer readable ID-tags or ID-cards and/or by biometric features.

It would be desirable to improve the access control of persons using an elevator system for traveling to destinations within a building.

US 2004/188185 A1 describes a security method for gaining access, which allows authorized persons to gain access to a protected area and prevents access by unauthorized persons. The method is characterized in that a number of persons in a verification area are determined, a number of authorization passes present in said area are verified, the number of persons and the number of authorization passes are compared and if the number of persons agrees with the number of authorized passes, an access approval signal is generated. The disclosure also relates to a device that is suitable for carrying out the method and for an elevator equipped with such a device.

WO 2015/099882 A1 discloses an automated elevator control system using facial recognition, comprising an elevator car, a facial image database comprising facial image data of authorized passengers and corresponding authorized floor destination data for each such passenger, a facial recognition program capable of comparing a facial image stored in the facial image database to video data output from an imaging device, and an imaging device capable of outputting video data. The system is capable of recognizing the elevator passenger's face in a field of view of the imaging device, capturing the elevator passenger's facial image using video data output from the imaging device, and comparing the captured facial image to pre-registered facial image data. Upon determining a match between the captured facial image and a stored facial image, the system is capable of sending a signal to the elevator control system to move the elevator car to the elevator passenger's authorized floor destination.

WO 2016/014313 A1 describes an elevator system which is configured for receiving, from a user, a destination selection and assigning to the user a first elevator and notifying the user of the assignment. The user is detected in a second elevator, and the second elevator is controlled to travel to the destination selected by the user based on detecting the user in the second elevator.

According to the invention, an elevator access control system comprises at least two cameras including: a first camera which is configured to be mounted to an elevator car for capturing at least one first picture of persons residing within the elevator car, and a second camera which is configured to be mounted to an elevator car for capturing at least one second picture of persons residing within the elevator car. The at least one first picture allows to identify individual persons and the at least one second picture allows to count the number of persons residing within the elevator car.

The elevator access control system further comprises an evaluation unit which is configured for identifying persons from the at least one first picture captured by the first camera, counting the number of persons residing within the elevator car from the at least one second picture captured by the second camera and providing a car enable signal only in case the number of identified persons is identical to the number of persons residing within the elevator car. The elevator access control system is configured for tracking all persons entering the elevator car in the at least one second picture; associating a list of allowed landings with every tracked person which has been identified; and issuing an alarm signal in case a tracked person leaves the elevator car at a landing he/she is not allowed to enter.

The invention further includes a method of controlling access to an elevator system comprising at least one elevator car which is equipped with an elevator access control system, wherein the method comprises the steps of: using a first camera for capturing at least one first picture of persons residing within the elevator car; identifying individual persons from the at least one first picture captured by the first camera; using a second camera for capturing at least one second picture of persons residing within the elevator car; counting the number of persons residing within the elevator car from the at least one second picture captured by the second camera; comparing the number of persons identified from the at least one first picture to the number of persons counted from the at least one second picture; and allowing the elevator car to move only in case the number of persons identified from the at least one first picture is equal to the number of persons counted in the at least one second picture.

The method further includes tracking all persons entering the elevator car in the at least one second picture; associating a list of allowed landings with every tracked person which has been identified; and issuing an alarm signal in case a tracked person leaves the elevator car at a landing he/she is not allowed to enter. This reliably prevents persons from unauthorized access to floors they are not allowed to enter.

The combination of the at least two cameras allows to check whether all persons residing within the elevator car have been identified as being allowed to enter the at least one destination served by the elevator. It further allows to prevent any further movement of the elevator car as long as not all persons residing within the elevator car have been identified.

This configuration provides reliable access control to destinations served by an elevator system within a building without the need for placing mechanical barriers in the lobby of the building. In an elevator system according to the invention, an unauthorized person may enter the elevator car, but an elevator car including at least one unauthorized person will not depart, and in consequence the unauthorized person will not be able to move to other floors of the building. In particular, movement of the car will be prevented in cases in which non-identified users enter the car together with or shortly after an authorized user, which is identified. In consequence, there is no need to provide mechanical barriers for preventing unauthorized persons from accessing the elevators.

As a result, the access control of persons entering a building is facilitated and improved.

An exemplary embodiment of the invention is described in the following with reference to the enclosed figures.
Figure 1 depicts an elevator system comprising an elevator access control system according to an exemplary embodiment of the invention.
Figure 2 is a flow diagram illustrating a method of controlling access to an elevator system according to an exemplary embodiment of the invention.

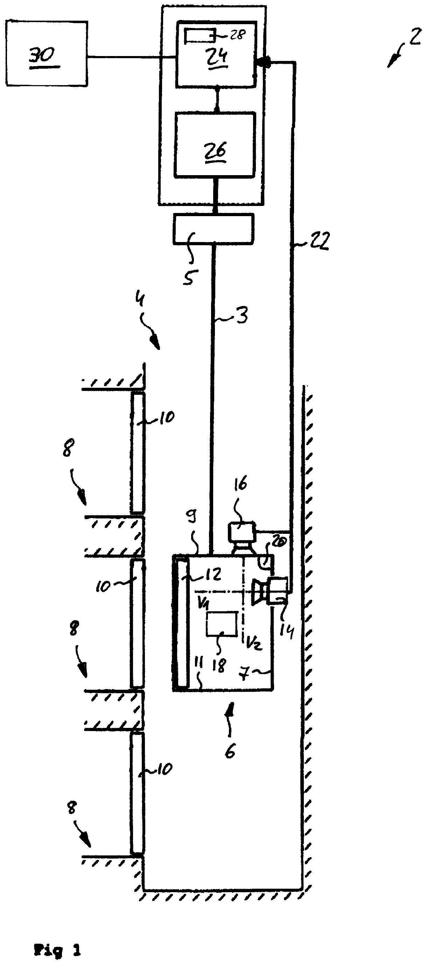

Figure 1 depicts an elevator system 2 comprising an elevator access control system according to an exemplary embodiment of the invention.

The elevator system 2 includes an elevator car 6 which is movably suspended within a hoistway 4 by means of a tension member 3. The tension member 3, for example a rope or belt, is connected to an elevator drive 5, which is configured for driving the tension member 3 in order to move the elevator car 6 along the height of the hoistway 4 between a plurality of different landings 8.

Each landing 8 is provided with a hoistway door 10, and the elevator car 6 is provided with a corresponding elevator car door 12 allowing persons to transfer between the landing 8 and the interior of the elevator car 6 when the elevator car 6 is positioned at the respective landing 8.

The exemplary embodiment shown in Figure 1 uses a 1:1 roping for suspending the elevator car 6. The skilled person, however, easily understands that the type of the roping is not essential for the invention and that different kinds of roping, e.g. a 2:1 roping, may be used as well. The elevator system 2 may use a counterweight (not shown) or not. The elevator drive 5 may be any form of drive used in the art, e.g. a traction drive or a hydraulic drive.

The elevator drive 5 is controlled by an elevator control unit 26 for moving the elevator car 6 between the different landings 8.

The elevator car 6 is provided with two cameras 14, 16. A first camera 14 is arranged at a rear wall 7 of the elevator car 6 opposite to the elevator car door 12 facing the elevator car door 12. The first camera 14 is configured for capturing pictures of persons entering into the elevator car 6 via the elevator car door 12. The viewing direction V₁ of the first camera 14 is oriented basically horizontally.

The viewing direction V₁ of the first camera 14, however, does not need to be oriented exactly horizontally. It is only important that the first camera 14 has a good view into the faces of persons entering the elevator car 6 through the car door 12. Thus, depending on the vertical position of the first camera 14, the viewing direction V₁ of the first camera 14 may be inclined upwards or downwards to some extent. The field of view of the first camera 14 may be relatively narrow focused to the faces of persons entering the elevator car 6 through the car door 12.

The elevator car 6 is further equipped with a second camera 16 provided at the top of the elevator car 6, e.g. at the ceiling 9 of the elevator car 6, with the viewing direction V₂ oriented downwardly. In the exemplary embodiment shown in Figure 1, the viewing direction V₂ is oriented vertically. It is, however, also possible that the viewing direction V₂ of the second camera 16 is oriented in an acute angle with respect to the vertical. The second camera 16 should have a field of view covering the whole area of the floor 11 of the elevator car 6. Alternatively, a plurality of second cameras 16 may be provided, which, in combination, cover the whole area of the floor 11 of the elevator car 6.

An optional lighting device 20 is provided within the elevator car 6 for illuminating the persons entering into the elevator car 6, in particular the faces of said persons, in order to improve the quality of the pictures taken by the first and second cameras 14, 16.

The first and second cameras 14, 16 may take pictures in the visible range of light. Alternatively, the first and second cameras 14, 16 may operate in the infrared range. The frequency of the light emitted by the lighting device 20 is adapted to the operating range of the first and second cameras 14, 16.

The first and second cameras 14, 16 are connected by a signal line 22 or by a wireless connection (not shown) with an evaluation unit 24. The evaluation unit 24 is configured for evaluating the pictures provided by the cameras 14, 16 and for supplying a signal indicating the result of said evaluation to the elevator control unit 26.

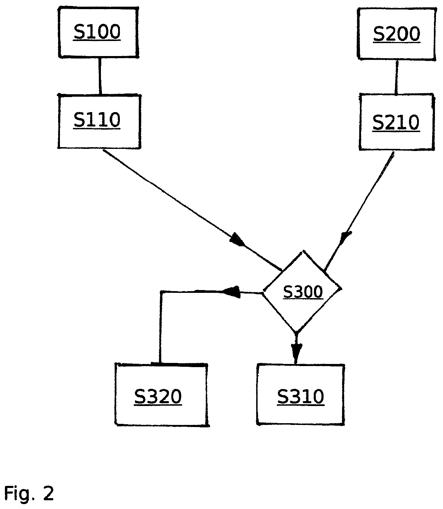

The operation of the elevator access control system according to an exemplary embodiment of the invention is described in the following with reference to Figure 2:
A (front) picture of every person entering the elevator car 6 through the elevator car door 12 is captured by the first camera 14, which is arranged at the opposing rear wall 7 of the elevator car 6 (S100).

Said picture is delivered to the evaluation unit 24, which is configured for evaluating the pictures (first pictures) provided by the first camera 14 in order to identify the person which has entered the elevator car 6 through the elevator car door 12 (S110).

This in particular may include to scan a database 28 comprising facial data of all persons authorized to use the elevator system 2. The first camera 14 may convert the data of the captured pictures using the Wiegand code and send a Wiegand tag to the evaluation unit 24.

Persons which are not known to the database 28 but which are authorized to use the elevator system, e.g. on a temporary basis, may be allowed to present an optical code, e.g. a QR-code, to the first camera 14 for authorization.

Simultaneously, the second camera 16 arranged at the top of the elevator car 6 takes second pictures of the interior space of the elevator car 6, preferably pictures covering the whole interior space of the elevator car 6 (S200).

These pictures are delivered to the evaluation unit 24 as well, and the evaluation unit 24 is configured for evaluating these second pictures for determining the total number of persons currently residing within the elevator car 6 (S210).

The evaluation unit 24 will compare the number of persons identified from the at least one first picture to the number of persons counted from the at least one second picture (S300) and allow the elevator control unit 26 to move the elevator car 6, i.e. to depart from the current landing 8, only in case all persons residing within the elevator car 6 have been identified as being authorized to use the elevator system 2 (S310).

In other words, the number of persons identified from the first pictures taken by the first camera 14 must be equal to the number of persons counted from the second picture(s) taken by the second camera 16 and all persons identified from the first pictures must be authorized to use the elevator system 2.

In particular, the number of persons residing within the elevator car 6, which has been determined from the second pictures provided by the second camera 16, may not exceed the number of persons which have been identified from the first pictures taken by the first camera 14 and which have been determined as being allowed to use the elevator system 2.

In case not all persons residing within the elevator car 6 have been identified as being authorized to use the elevator system 2, operation of the elevator drive 5 is blocked and an optical and/or an acoustical signal indicating that unauthorized persons are present within the elevator car 6 is generated and delivered to the persons within the elevator car 6 and/or to responsible security personal (S320).

In such a case all persons within the elevator car 6 may be requested to leave the elevator car 6 in order to start over again from an empty elevator car 6.

In an alternative embodiment the elevator access control system may be configured for tracking all persons entering the elevator car 6 in the second picture(s) allowing to distinguish between authorized and unauthorized person(s) within the second picture(s). In such an embodiment the elevator car 6 may be allowed to move as soon as all unauthorized persons have left the elevator car 6. As an optional feature the elevator control 26 may be configured to move the elevator car 6 only to landings 8 which at least one of the persons residing within the elevator car 6 is allowed to enter. For this purpose a list of allowed landings may be associated with each potential passenger within the database 28.

The elevator access control system in particular is configured for tracking all persons entering the elevator car 6 in the second picture(s) and associating a list of allowed landings with every tracked person which has been identified. The elevator access control system is configured for issuing an alarm signal in case a tracked person leaves the elevator car 6 at a landing 8 he/she is not allowed to enter.

In case a person is identified as being allowed to enter only one of the landings 8, this landing may be delivered as desired destination to the elevator control unit 26. In this case there is no need for such a person to enter his desired destination by means of a manual service call.

In the exemplary embodiment shown in Figure 1 only a single first camera 14 and a single second camera 16 are provided, respectively. The skilled person, however, will easily understand that two or more first and/or second cameras 14, 16 may be provided. Each of such a plurality of first and/or second cameras 14, 16 may take pictures of a portion within the elevator car 6 and a combination of all pictures taken by the plurality of all cameras 14, 16 may be evaluated by the evaluation unit 24 in order to identify all persons entering the elevator car 6 and/or for reliably determining the number of persons residing within the elevator car 6. At least one of the cameras 14, 16 may be a 3D-camera configured for taking three dimensional pictures, and each of the cameras 14, 16 may be a b/w-camera 14, 16 or a camera 14, 16 providing colored pictures.

The elevator car 6 may be equipped with a display and control unit 18 which allows to enter elevator service calls in particular elevator service calls including the desired destination(s).

Alternatively or additionally the display and control unit 18 may show the pictures taken by at least one of the cameras 14, 16 together with an indicator whether the person shown has been identified. This allows persons, which have not yet been identified, to change the position of their face with respect to the first camera 14 in order to enhance the chance of being identified.

In case the operation of the elevator drive 5 is blocked, since not all persons residing within the elevator car 6 have been identified as being allowed to use the elevator system 2, the picture(s) of the person(s) which have not been identified may be shown on the display and control unit 18 together with a request to said persons to identify themselves.

Alternatively or additionally pictures of non-identified persons may be displayed outside the elevator car 6, e.g. in a security center 30, in order to allow security personal to resolve the issue.

An elevator system 2 according to exemplary embodiments of the invention allows a person to leave the lobby and to enter one of the floors of a building only after having been identified as being allowed to enter the building and the respective floor.

A number of optional features are set out in the following. These features may be realized in particular embodiments, alone or in combination with any of the other features.

In an embodiment, the second camera may be configured to take the at least one second picture from a height above the persons residing within the elevator car in a basically downward direction. The second camera in particular may be configured to take the at least one second picture in a vertical or close to vertical downward direction. Such a configuration is very suitable for counting the number of persons residing within the elevator car and reliably prevents person from hiding and not being detected within the picture captured by the at least one second camera.

In an embodiment, the second camera may be configured to be arranged at the ceiling of the elevator car for allowing to take the at least one second picture from a height above the heads of the persons residing within the elevator car in a vertical downward direction.

In an embodiment, the field of view of the first camera may be oriented in a basically horizontal direction. The first camera in particular may be arranged at a height of 1,5 m to 2,5 m, in particular at a height between 1,75 m and 2,0 m above the bottom of the elevator car. The first camera in particular may be configured to be arranged at a wall, in particular at the rear wall, of the elevator car. Such a configuration is very suitable for capturing pictures allowing for the identification of individual persons, in particular by face recognition.

In an embodiment the elevator access control system further may comprise an evaluation unit which is configured for identifying persons from the at least one first picture captured by the first camera, counting the number of persons residing within the elevator car from the at least one second picture captured by the second camera and providing a car enable signal only in case the number of identified persons is identical to the number of persons which have been identified from the at least one first picture. This provides a very effective access control.

In case the number of identified persons is not identical to the number of persons which have been identified from the at least one first picture all persons within the elevator car, all persons may be requested to leave the elevator car in order to start over again from an empty elevator car. This allows to solve the issue of an unidentified person being present within the elevator car without the need for intervention by security personal.

In an alternative embodiment the elevator access control system may be configured for tracking all persons entering the elevator car in the second picture(s) allowing to distinguish between authorized and unauthorized person(s) within the second picture(s). In such an embodiment the elevator car may be allowed to move as soon as all unauthorized persons have left the elevator car.

This allows the elevator car to depart faster and more conveniently as it does not require all persons to leave the elevator car.

Exemplary embodiments of the invention further may include an elevator car which is equipped with an elevator access control system according to an exemplary embodiment of the invention as it has been described before. Such an elevator car allows to check whether all persons residing within the elevator car have been identified as being allowed to enter the building and to prevent any further movement of the elevator car as long as not all persons residing within the elevator car have been identified.

In an embodiment the elevator car may further comprise at least one lighting device, which is configured for illuminating the persons residing within the elevator car. The at least one lighting device in particular may be configured for illuminating the faces of the persons residing within the elevator car. Providing an appropriate illumination improves the quality and reliability of the identification.

Exemplary embodiments of the invention may further include an elevator system which comprises such an elevator car and further an elevator control unit which is configured for allowing the elevator car to depart only if all persons residing within the elevator car have been identified as being allowed to use the elevator system.

In an embodiment the elevator system may comprise a database including a set of data for each person being allowed to use the elevator system. Such a database allows an easy identification of the person which are allowed to enter the building via the elevator system.

In an embodiment the database may comprise biometric data, in particular facial data, of persons which are allowed to use the elevator system. In consequence, these persons may be identified by their biometric data.

In an embodiment the elevator system the database may comprise optical code data, in particular QR code data, related to persons which are allowed to use the elevator system. Storing optical code data, in particular QR code data, in the database provides an additional way of providing access to the building. It in particular allows persons such as occasional visitors, for which biometric data is not available, to enter the building.

In an embodiment the database may comprise a list of allowed destinations for each persons allowed to use the elevator system and the elevator control unit is configured to allow the elevator car to stop only at destinations which are included in the list of allowed destinations of at least one of the persons which have been identified from the at least one first picture as currently residing within the elevator car. This helps to prevent persons from unauthorized access to floors they are not allowed to enter.

In an embodiment the database may comprise a desired destination for at least one of the persons allowed to use the elevator system and the elevator control unit is configured for moving to the desired destinations of all persons which have been identified from the at least one first picture as currently residing within the elevator car. This facilitates the use of the elevator system as the elevator car automatically moves to the desired destinations of all persons residing within the elevator car without human intervention, i.e. the users do not need to manually enter service calls for selecting the desired destinations.

In an embodiment the method of controlling access to an elevator system may comprise the steps of identifying a list of allowed destinations for each person identified from the first picture and allowing the elevator car to stop only at destinations which are included in the list of allowed destination of at least one person identified from the first picture. Thus, access to each floor may be controlled individually, and persons which are allowed to access only some of the floors of the building are prevented from entering floors they are not allowed to enter.

In an embodiment the method further may include the steps of identifying a destination assigned to at least one of the persons which has been identified from the at least one first picture as residing within the elevator car and moving the elevator car to said destination. In such a configuration the person does not need to enter his desired destination manually; as a result, the usage of the elevator system is facilitated and more convenient.

### References

- 2: elevator system
- 3: tension member
- 4: hoistway
- 5: drive
- 6: elevator car
- 7: rear wall of the elevator car
- 8: landing
- 9: ceiling of the elevator car
- 10: hoistway door
- 11: floor of the elevator car
- 12: elevator car door
- 14: first camera
- 16: second camera
- 18: display and control unit
- 20: lighting device
- 22: signal line
- 24: evaluation unit
- 26: elevator control unit
- 28: database
- 30: security center

## Claims

1. Elevator access control system comprising at least two cameras (14, 16) including:
a first camera (14) which is configured to be mounted to an elevator car (6) for capturing at least one first picture of persons residing within the elevator car (6), the at least one first picture allowing to identify individual persons;
a second camera (16) which is configured to be mounted to the elevator car (6) for capturing at least one second picture of persons residing within the elevator car (6), the at least one second picture allowing to count the number of persons residing within the elevator car (6); and
an evaluation unit (24) which is configured for identifying persons from the at least one first picture captured by the first camera (14), counting the number of persons residing within the elevator car (6) from the at least one second picture captured by the second camera (16) and providing a car enable signal only in case the number of identified persons is identical to the number of persons residing within the elevator car (6);
wherein the elevator access control system is configured for:
tracking all persons entering the elevator car (6) in the at least one second picture;
associating a list of allowed landings with every tracked person which has been identified; and
issuing an alarm signal in case a tracked person leaves the elevator car (6) at a landing (8) he/she is not allowed to enter.

2. Elevator access control system according to claim 1, wherein the second camera (16) is configured to take the at least one second picture from a height above the persons in a basically downward direction (V₂).

3. Elevator access control system according to claim 2, wherein the second camera (16) is configured to be arranged at the ceiling (9) of the elevator car (6).

4. Elevator access control system according to any of the preceding claims, wherein the field of view of the first camera (14) is oriented in a basically horizontal direction (V₁).

5. Elevator access control system according to any of the preceding claims, wherein the first camera (14) is configured to be arranged at a wall, in particular at the rear wall (7), of the elevator car (6).

6. Elevator car (6) equipped with the elevator access control system according to one of the preceding claims.

7. Elevator car (6) according to claim 6 further comprising at least one lighting device (20) configured for illuminating the persons residing within the elevator car (6), wherein the at least one lighting device (20) in particular is configured for illuminating the faces of persons residing within the elevator car (6).

8. Elevator system (2) comprising an elevator car (6) according to claim 6 or 7 further comprising an elevator control unit (26) which is configured for allowing the elevator car (6) to move only in case the number of persons which have been identified from the at least one first picture is identical to the number of persons which have been counted from the at least one second picture.

9. Elevator system (2) according to claim 8, comprising a database (28) including a set of data for each person which is allowed to use the elevator system (2).

10. Elevator system (2) according to claim 9, wherein the database comprises biometric data, in particular facial data, of persons which are allowed to use the elevator system (2), and/or wherein the database (28) comprises optical code data, in particular QR code data, related to persons which are allowed to use the elevator system (2).

11. Elevator system (2) according to claim 9 or 10, wherein the database (28) comprises for each person allowed to use the elevator system (2) a list of allowed destinations and wherein the elevator control unit (26) is configured for allowing the elevator car (6) to stop only at destinations which are included in the list of allowed destinations of at least one of the persons which have been identified from the at least one first picture.

12. Elevator system (2) according to any of claims 9 to 11, wherein the database (28) comprises a desired destination for at least one of the persons allowed to use the elevator system (2) and wherein the elevator control unit (26) is configured for moving to the desired destinations of all persons which have been identified from the at least one first picture.

13. Method of controlling access to an elevator system (2) comprising at least one elevator car (6), wherein the method comprises the steps of:
using a first camera (14) for capturing at least one first picture of persons residing within the elevator car (6);
identifying individual persons from the at least one first picture captured by the first camera (14);
using a second camera (16) for capturing at least one second picture of persons residing within the elevator car (6);
counting the number of persons residing within the elevator car (6) from the at least one second picture captured by the second camera (16);
comparing the number of persons identified from the at least one first picture with the number of persons residing within the elevator car (6) counted from the at least one second picture;
allowing the elevator car (6) to move only in case the number of persons identified from the at least one first picture is equal to the number of persons counted from the at least one second picture;
tracking all persons entering the elevator car (6) in the at least one second picture;
associating a list of allowed landings with every tracked person which has been identified; and
issuing an alarm signal in case a tracked person leaves the elevator car (6) at a landing (8) he/she is not allowed to enter.

14. Method of controlling access to an elevator system (2) according to claim 13, wherein the method comprises
identifying a list of allowed destinations for each person identified from the first picture; and
allowing the elevator car (6) to stop only at destinations which are included in the list of allowed destinations of at least one person identified from the first picture.

## Patentansprüche

1. Zugangskontrollsystem für einen Aufzug, umfassend mindestens zwei Kameras (14, 16) und Folgendes beinhaltend:
eine erste Kamera (14), die so konfiguriert ist, dass sie an einer Aufzugkabine (6) zum Aufnehmen mindestens eines ersten Bildes von Personen, die sich innerhalb der Aufzugkabine (6) aufhalten, befestigt werden kann, wobei das mindestens eine erste Bild es ermöglicht, einzelne Personen zu identifizieren;
eine zweite Kamera (16), die so konfiguriert ist, dass sie an der Aufzugkabine (6) zum Aufnehmen mindestens eines zweiten Bildes von Personen, die sich innerhalb der Aufzugkabine (6) aufhalten, befestigt werden kann, wobei das mindestens eine zweite Bild es ermöglicht, die Anzahl von Personen zu zählen, die sich innerhalb der Aufzugkabine (6) aufhalten; und
eine Auswertungseinheit (24), die zum Identifizieren von Personen auf dem mindestens einen ersten Bild, das von der ersten Kamera (14) aufgenommen wurde, zum Zählen der Anzahl von Personen, die sich innerhalb der Aufzugkabine (6) aufhalten, auf dem mindestens einen zweiten Bild, das von der zweiten Kamera (16) aufgenommen wurde, und zum Bereitstellen eines Aufzugfreigabesignals nur in dem Fall, dass die Anzahl von identifizierten Personen mit der Anzahl von Personen, die sich innerhalb der Aufzugkabine (6) aufhalten, identisch ist, konfiguriert ist;
wobei das Zugangskontrollsystem für einen Aufzug zu Folgendem konfiguriert ist:
Nachverfolgen aller Personen, die die Aufzugkabine (6) betreten, in dem mindestens einen zweiten Bild;
Verknüpfen einer Liste zugelassener Stockwerke mit jeder nachverfolgten Person, die identifiziert wurde; und
Ausgeben eines Alarmsignals, falls eine nachverfolgte Person die Aufzugkabine (6) auf einem Stockwerk (8) verlässt, das er / sie nicht betreten darf.

2. Zugangskontrollsystem für einen Aufzug nach Anspruch 1, wobei die zweite Kamera (16) so konfiguriert ist, dass sie das mindestens eine zweite Bild aus einer Höhe über den Personen in einer im Wesentlichen Abwärtsrichtung (V₂) aufnimmt.

3. Zugangskontrollsystem für einen Aufzug nach Anspruch 2, wobei die zweite Kamera (16) so konfiguriert ist, dass sie an der Decke (9) der Aufzugkabine (6) angeordnet werden kann.

4. Zugangskontrollsystem für einen Aufzug nach einem der vorstehenden Ansprüche, wobei das Sichtfeld der ersten Kamera (14) in einer im Wesentlichen horizontalen Richtung (V₁) ausgerichtet ist.

5. Zugangskontrollsystem für einen Aufzug nach einem der vorstehenden Ansprüche, wobei die erste Kamera (14) so konfiguriert ist, dass sie an einer Wand, insbesondere an der Rückwand (7), der Aufzugkabine (6) angeordnet werden kann.

6. Aufzugkabine (6), ausgestattet mit dem Zugangskontrollsystem für einen Aufzug nach einem der vorstehenden Ansprüche.

7. Aufzugkabine (6) nach Anspruch 6, ferner umfassend mindestens eine Beleuchtungseinrichtung (20), die zum Beleuchten der Personen, die sich innerhalb der Aufzugkabine (6) aufhalten, konfiguriert ist, wobei die mindestens eine Beleuchtungseinrichtung (20) insbesondere zum Beleuchten der Gesichter von Personen, die sich innerhalb der Aufzugkabine (6) aufhalten, konfiguriert ist.

8. Aufzugsystem (2), umfassend eine Aufzugkabine (6) nach Anspruch 6 oder 7, ferner umfassend eine Aufzugsteuerungseinheit (26), die so konfiguriert ist, dass sie nur zulässt, dass sich die Aufzugkabine (6) bewegt, wenn die Anzahl von Personen, die auf dem mindestens einen ersten Bild identifiziert wurden, mit der Anzahl von Personen, die auf dem mindestens einen zweiten Bild gezählt wurden, identisch ist.

9. Aufzugsystem (2) nach Anspruch 8, umfassend eine Datenbank (28), die einen Datensatz für jede Person, der es erlaubt ist, das Aufzugsystem (2) zu nutzen, beinhaltet.

10. Aufzugsystem (2) nach Anspruch 9, wobei die Datenbank biometrische Daten, insbesondere Gesichtsdaten, von Personen, denen es erlaubt ist, das Aufzugsystem (2) zu nutzen, umfasst und/oder wobei die Datenbank (28) Daten mit optischem Code, insbesondere QR-Codedaten, in Bezug auf Personen, denen es erlaubt ist, das Aufzugsystem (2) zu nutzen, umfasst.

11. Aufzugsystem (2) nach Anspruch 9 oder 10, wobei die Datenbank (28) für jede Person, der es erlaubt ist, das Aufzugsystem (2) zu nutzen, eine Liste zulässiger Ziele umfasst und wobei die Aufzugsteuerungseinheit (26) so konfiguriert ist, dass sie nur zulässt, dass die Aufzugkabine (6) an Zielen stoppt, die in der Liste der zulässigen Ziele von mindestens einer der Personen, die auf dem mindestens einen ersten Bild identifiziert wurden, beinhaltet sind.

12. Aufzugsystem (2) nach einem der Ansprüche 9 bis 11, wobei die Datenbank (28) ein erwünschtes Ziel für mindestens eine der Personen, denen es erlaubt ist, das Aufzugsystem (2) zu nutzen, umfasst, und wobei die Aufzugsteuerungseinheit (26) so konfiguriert ist, dass sie zu den erwünschten Zielen aller Personen, die auf dem mindestens einen ersten Bild identifiziert wurden, fährt.

13. Verfahren zum Steuern des Zugangs zu einem Aufzugsystem (2), das mindestens eine Aufzugkabine (6) umfasst, wobei das Verfahren die folgenden Schritte umfasst:
Verwenden einer ersten Kamera (14) zum Aufnehmen mindestens eines ersten Bildes von Personen, die sich innerhalb der Aufzugkabine (6) aufhalten;
Identifizieren einzelner Personen auf dem mindestens einen ersten Bild, das von der ersten Kamera (14) aufgenommen wurde;
Verwenden einer zweiten Kamera (16) zum Aufnehmen mindestens eines zweiten Bildes von Personen, die sich innerhalb der Aufzugkabine (6) aufhalten;
Zählen der Anzahl von Personen, die sich innerhalb der Aufzugkabine (6) aufhalten, auf dem mindestens einen zweiten Bild, das von der zweiten Kamera (16) aufgenommen wurde;
Vergleichen der Anzahl von Personen, die auf dem mindestens einen ersten Bild identifiziert wurden, mit der Anzahl von Personen, die sich innerhalb der Aufzugkabine (6) aufhalten, die auf dem mindestens einen zweiten Bild gezählt wurden;
Zulassen, dass sich die Aufzugkabine (6) sich bewegt, nur in dem Fall, dass die Anzahl von Personen, die auf dem mindestens einen ersten Bild identifiziert wurden, mit der Anzahl von Personen, die auf dem mindestens einen zweiten Bild gezählt wurden, identisch ist;
Nachverfolgen aller Personen, die die Aufzugkabine (6) betreten, in dem mindestens einen zweiten Bild;
Verknüpfen einer Liste zugelassener Stockwerke mit jeder nachverfolgten Person, die identifiziert wurde; und
Ausgeben eines Alarmsignals, falls eine nachverfolgte Person die Aufzugkabine (6) auf einem Stockwerk (8) verlässt, das er / sie nicht betreten darf.

14. Verfahren zum Steuern des Zugangs zu einem Aufzugsystem (2) nach Anspruch 13, wobei das Verfahren Folgendes umfasst
Identifizieren einer Liste zulässiger Ziele für jede Person, die auf dem ersten Bild identifiziert wurde; und
Zulassen, dass die Aufzugkabine (6) anhält, nur an Zielen, die in der Liste zulässiger Ziele mindestens einer Person, die auf dem ersten Bild identifiziert wurde, beinhaltet sind.

## Revendications

1. Système de commande d'accès à un ascenseur comprenant au moins deux caméras (14, 16) comportant :
une première caméra (14) qui est conçue pour être montée sur une cabine d'ascenseur (6) pour capturer au moins une première image de personnes résidant à l'intérieur de la cabine d'ascenseur (6), l'au moins une première image permettant d'identifier des individus ;
une seconde caméra (16) qui est conçue pour être montée sur la cabine d'ascenseur (6) pour capturer au moins une seconde image de personnes résidant à l'intérieur de la cabine d'ascenseur (6), l'au moins une seconde image permettant de compter le nombre de personnes résidant à l'intérieur de la cabine d'ascenseur (6) ; et
une unité d'évaluation (24) qui est conçue pour identifier des personnes à partir de l'au moins une première image capturée par la première caméra (14), comptant le nombre de personnes résidant à l'intérieur la cabine d'ascenseur (6) à partir de l'au moins une seconde image capturée par la seconde caméra (16) et fournissant un signal de validation de cabine uniquement dans le cas où le nombre de personnes identifiées est identique au nombre de personnes résidant à l'intérieur de la cabine d'ascenseur (6) ;
dans lequel le système de commande d'accès à l'ascenseur est conçu pour :
suivre toutes les personnes entrant dans la cabine d'ascenseur (6) dans l'au moins une seconde image ;
associer une liste d'étages autorisés à chaque personne suivie qui a été identifiée ; et
émettre un signal d'alarme dans le cas où une personne suivie quitte la cabine d'ascenseur (6) à un étage (8) dans lequel elle n'est pas autorisée à entrer.

2. Système de commande d'accès à un ascenseur selon la revendication 1, dans lequel la seconde caméra (16) est conçue pour prendre l'au moins une seconde image depuis une hauteur au-dessus des personnes dans une direction essentiellement descendante (V₂).

3. Système de commande d'accès à un ascenseur selon la revendication 2, dans lequel la seconde caméra (16) est conçue pour être disposée au plafond (9) de la cabine d'ascenseur (6).

4. Système de commande d'accès à un ascenseur selon l'une quelconque des revendications précédentes, dans lequel le champ de vision de la première caméra (14) est orienté dans une direction essentiellement horizontale (V₁).

5. Système de commande d'accès à un ascenseur selon l'une quelconque des revendications précédentes, dans lequel la première caméra (14) est conçue pour être agencée au niveau d'une paroi, en particulier au niveau de la paroi arrière (7), de la cabine d'ascenseur (6).

6. Cabine d'ascenseur (6) équipée du système de commande d'accès à un ascenseur selon l'une des revendications précédentes.

7. Cabine d'ascenseur (6) selon la revendication 6, comprenant en outre au moins un dispositif d'éclairage (20) conçu pour éclairer les personnes résidant à l'intérieur de la cabine d'ascenseur (6), dans laquelle l'au moins un dispositif d'éclairage (20) en particulier est conçu pour éclairer les visages de personnes résidant à l'intérieur de la cabine d'ascenseur (6).

8. Système d'ascenseur (2) comprenant une cabine d'ascenseur (6) selon la revendication 6 ou 7 comprenant en outre une unité de commande d'ascenseur (26) qui est conçue pour permettre à la cabine d'ascenseur (6) de se déplacer uniquement dans le cas où le nombre de personnes qui ont été identifiées à partir de l'au moins une première image est identique au nombre de personnes qui ont été comptées à partir de l'au moins une seconde image.

9. Système d'ascenseur (2) selon la revendication 8, comprenant une base de données (28) comportant un ensemble de données pour chaque personne qui est autorisée à utiliser le système d'ascenseur (2).

10. Système d'ascenseur (2) selon la revendication 9, dans lequel la base de données comprend des données biométriques, en particulier des données faciales, de personnes qui sont autorisées à utiliser le système d'ascenseur (2), et/ou dans lequel la base de données (28) comprend des données de code optique, en particulier des données de code QR, relatives aux personnes qui sont autorisées à utiliser le système d'ascenseur (2) .

11. Système d'ascenseur (2) selon la revendication 9 ou 10, dans lequel la base de données (28) comprend, pour chaque personne autorisée à utiliser le système d'ascenseur (2), une liste de destinations autorisées et dans lequel l'unité de commande d'ascenseur (26) est conçue pour permettre à la cabine d'ascenseur (6) de s'arrêter uniquement à des destinations qui sont incluses dans la liste de destinations autorisées d'au moins l'une des personnes qui ont été identifiées à partir de l'au moins une première image.

12. Système d'ascenseur (2) selon l'une quelconque des revendications 9 à 11, dans lequel la base de données (28) comprend une destination souhaitée pour au moins l'une des personnes autorisées à utiliser le système d'ascenseur (2) et dans lequel l'unité de commande d'ascenseur (26) est conçue pour se déplacer vers les destinations souhaitées de toutes les personnes qui ont été identifiées à partir de l'au moins une première image.

13. Procédé de commande d'accès à un système d'ascenseur (2) comprenant au moins une cabine d'ascenseur (6), dans lequel le procédé comprend les étapes :
d'utilisation d'une première caméra (14) pour capturer au moins une première image de personnes résidant à l'intérieur de la cabine d'ascenseur (6) ;
d'identification d'individus à partir de l'au moins une première image capturée par la première caméra (14) ;
d'utilisation d'une seconde caméra (16) pour capturer au moins une seconde image de personnes résidant à l'intérieur de la cabine d'ascenseur (6) ;
de comptage du nombre de personnes résidant à l'intérieur de la cabine d'ascenseur (6) à partir de l'au moins une seconde image capturée par la seconde caméra (16) ;
de comparaison du nombre de personnes identifiées à partir de l'au moins une première image avec le nombre de personnes résidant à l'intérieur de la cabine d'ascenseur (6) compté à partir de l'au moins une seconde image ;
d'autorisation de la cabine d'ascenseur (6) de se déplacer uniquement dans le cas où le nombre de personnes identifiées à partir de l'au moins une première image est égal au nombre de personnes comptées à partir de l'au moins une seconde image ;
de suivi de toutes les personnes entrant dans la cabine d'ascenseur (6) dans l'au moins une seconde image ;
d'association d'une liste d'étages autorisés à chaque personne suivie qui a été identifiée ; et
d'émission d'un signal d'alarme au cas où une personne suivie quitte la cabine d'ascenseur (6) à un étage (8) dans lequel elle n'est pas autorisée à entrer.

14. Procédé de commande d'accès à un système d'ascenseur (2) selon la revendication 13, dans lequel le procédé comprend
l'identification d'une liste de destinations autorisées pour chaque personne identifiée à partir de la première image ; et
l'autorisation de la cabine d'ascenseur (6) de s'arrêter uniquement à des destinations qui sont incluses dans la liste de destinations autorisées d'au moins une personne identifiée à partir de la première image.
